# EUROPÄISCHE PATENTANMELDUNG

(11) **EP 0 901 006 A1**
(43) Veröffentlichungstag der Anmeldung: **10.03.1999**
(21) Anmeldenummer: 98401916.6
(22) Anmeldetag: 27.07.1998
(51) Int. Cl.: G01K 11/32

(54) **Vorrichtung zur Ermittlung der Temperatur eines Objekts und Verfahren zur Herstellung einer solchen Vorrichtung**

(30) Priorität: 04.09.1997 DE 19738651
(71) Anmelder: ALCATEL, 75008 Paris (FR)
(72) Erfinder: Klass, Joachim, Dipl.-Ing., 31655 Stadthagen (DE); Stürmer, Michael, Dipl.-Ing., 32584 Löhne (DE); Madry, Peter, Dipl.-Ing., 30890 Barsinghausen (DE)
(74) Vertreter: Mende, Dirk

(57) **Zusammenfassung**

Eine Vorrichtung (1) zur Ermittlung der Temperatur eines Objekts (3) hat einen zumindest eine optische Faser (7) aufweisenden Temperatursensor (5) und ein Temperaturmeßsystem (10), wobei die optische Faser (7) des Temperatursensors (5) durch ein Trägerelement (15, 17, 18) ist. Diese Vorrichtung ermöglicht auf einfache Weise eine genaue Messung der Temperatur auch von kleineren Objekten (3) (Figur 2).

## Beschreibung

Die Erfindung betrifft eine Vorrichtung zur Ermittlung der Temperatur eines Objekts mit einem zumindest eine optische Faser aufweisenden Temperatursensor und einem Temperaturmeßsystem bzw. ein Verfahren zur Herstellung einer einen Temperatursensor mit zumindest einer optischen Faser und ein Temperaturmeßsystem aufweisenden Vorrichtung zur Ermittlung der Temperatur eines Objekts, bei dem der Temperatursensor an das Objekt gelegt und mit dem Temperaturmeßsystem verbunden wird.

Insbesondere in Ballungsräumen ist es aufgrund der Vielzahl von für die verschiedensten Zwecke in der Erde verlegten Kabeln und Leitungen sowie der zahlreichen Bauwerke in zunehmendem Maße notwendig, die im Boden entlang einer Kabelstrecke herrschenden Temperaturen zu ermitteln und die thermische Belastung des zumindest einen Kabels zu überprüfen. Die Kenntnis der tatsächlich im Kabel herrschenden Temperaturen ermöglicht zudem eine optimale Ausnutzung der Übertragungskapazitäten eines Energiekabels bei gleichzeitiger Einhaltung der thermischen Obergrenzen.

In der EP 0 203 249 B1 ist ein Energiekabel beschrieben, das zumindest eine als Temperatursensor dienende, sich in einer Schutzhülle entlang des Kabels erstreckende optische Faser aufweist. Die optische Faser ermöglicht während des Betriebes eine metallfreie Temperaturerfassung über die gesamte Länge des Kabels, so daß an bestimmten Stellen auftretende Temperaturerhöhungen und gegebenenfalls auftretende Fehler erkannt werden können.

Auch die Temperaturen anderer unter elektrischer Spannung stehender Objekte wie z. B. Garnituren von Mittel- oder Hochspannungskabeln oder anderer Einrichtungen können mit Hilfe von optischen Fasern ermittelt und gegebenenfalls überwacht werden. Um dabei eine ausreichend hohe Meßgenauigkeit zu gewährleisten, ist auch für die Temperaturüberwachung kleinerer Objekte bzw. kleinerer Bereiche eine Länge der zur Temperaturerfassung dienenden optischen Faser von mehreren Metern erforderlich. Bei Objekten, deren Umfang sich bei einem Anstieg oder Absinken der Temperatur ändert, ist eine enge Umwicklung des Objekts mit mehreren Metern Faserlänge nicht möglich.

Der Erfindung liegt daher das Problem zugrunde, eine einfach herstellbare und montierbare Vorrichtung zur Ermittlung der Temperatur verschiedener Objekte auszubilden, die universell einsetzbar ist und auch bei kleineren Objekten eine hohe Meßgenauigkeit ermöglicht.

Dieses Problem wird gemäß der Erfindung dadurch gelöst, daß die optische Faser des Temperatursensors durch ein Trägerelement gehalten ist.

Die durch die Erfindung erzielbaren Vorteile bestehen insbesondere darin, daß der Temperatursensor auch bei kleinen Abmessungen eine große Länge der zur Temperaturmessung verwendeten, vorzugsweise aus Glas ausgebildeten optischen Faser aufweisen kann, die zur Temperaturmessung verwendete Faser somit erheblich länger als das zu überwachende Objekt sein kann. Eine große die zu messende Temperatur aufweisende Faserlänge ermöglicht auch bei der Temperaturmessung bzw. Temperaturüberwachung kleinerer Bereiche oder Objekte wie z. B. Garnituren von Mittel- oder Hochspannungskabeln eine exakte und kontinuierliche Temperaturmessung bzw. -überwachung. Hierzu trägt auch die durch die Länge der optischen Faser automatisch erfolgende Mittelwertbildung bei. Die erfindungsgemäße Vorrichtung ist auch zur Ermittlung der Temperatur von Objekten geeignet, deren Umfang sich in Abhängigkeit von der Temperatur ändert. Sie läßt sich ebenfalls zur Messung der Temperatur von Objekten verwenden, die sich in geringem Abstand voneinander befinden und deren Temperaturen ansonsten nicht getrennt meßbar wären. Der ein Trägerelement und eine durch diesen gehaltene optische Faser aufweisende Temperatursensor ist zudem einfach und kostengünstig herstellbar und kann auf einfache Weise ohne irgendwelche Probleme an ein zu prüfendes Objekt angelegt bzw. um dieses herumgelegt oder herumgewickelt werden. Um den Temperatursensor beispielsweise an einer Mittel- oder Hochspannungsgarnitur zu halten, kann über dem um die Garnitur herumgelegten Temperatursensor z. B. eine Bewicklung vorgesehen sein.

Durch die in den Unteransprüchen aufgeführten Merkmale sind vorteilhafte Weiterbildungen und Verbesserungen der Erfindung möglich.

Für eine sichere Anordnung der optischen Faser und eine einfache Herstellung des Temperatursensors ist es vorteilhaft, wenn das Trägerelement durch zwei Folien gebildet ist, zwischen denen die optische Faser angeordnet ist.

Um bei vorgegebenen Abmessungen des Temperatursensors auf einfache Art und Weise eine möglichst große Länge der zur Temperaturmessung dienenden optischen Faser zwischen den beiden Folien des Temperatursensors unterbringen zu können, ist es von Vorteil, wenn die optische Faser spiralförmig, mäanderförmig oder schleifenförmig zwischen den beiden Folien angeordnet ist. So läßt sich auch bei kleinen Abmessungen des Temperatursensors eine hohe Meßgenauigkeit realisieren.

Die zumindest annähernd luftdichte Einbettung der optischen Faser zwischen den beiden Folien ermöglicht einen direkten Kontakt der zur Temperaturmessung verwendeten optischen Faser ohne Lufteinschluß zum Objekt und damit einen guten Wärmeübergang zwischen Objekt und optischer Faser.

Vorteilhaft ist es, wenn der Temperatursensor um das Objekt herumgelegt ist, so daß eine einfache und exakte Ermittlung der Temperatur des Objekts möglich ist.

Um die optische Faser bei der Herstellung des Temperatursensors in ihrer Lage und Form, beispielsweise in ihrer Spiral-, Schleifen- oder Mäanderform zu halten und eine sichere und im wesentlichen luftdichte Verbindung zwischen den beiden Folien zu gewährleisten, ist es von Vorteil, wenn zumindest eine der beiden Folien an ihrer der anderen Folie zugewandten Seite mit einem Klebemittel versehen ist.

Aus dem gleichen Grund ist es ebenfalls von Vorteil, wenn zumindest eine der Folien an ihrer der anderen Folie zugewandten Seite selbstklebend ist.

Um eine einfache Herstellung und Montage und eine geringe Wanddicke des Temperatursensors sowie eine exakte Temperaturerfassung zu ermöglichen, ist es von Vorteil, wenn beide Folien aus einem Kunststoff ausgebildet sind. Es ist vorteilhaft, wenn zumindest die dem Objekt zugewandte Folie eine gute Wärmeleitfähigkeit aufweist, so daß ein guter Wärmeübergang zwischen dem Objekt und der zur Temperaturmessung dienenden optischen Faser gewährleistet ist.

Für einen guten Wärmeübergang zwischen dem Objekt und der optischen Faser des Temperatursensors ist es ebenfalls von Vorteil, wenn zumindest die dem Objekt zugewandte Folie an ihrer der anderen Folie abgewandten, in der Regel unmittelbar an dem Objekt anliegenden Außenseite mit einer Metallschicht versehen ist.

Handelt es sich bei dem Objekt, dessen Temperatur überwacht werden soll, um ein langgestrecktes Gut wie z. B. ein Mittel- oder Hochspannungskabel, ein

Hochfrequenzkabel oder eine Rohrleitung, so ist es vorteilhaft, als Trägerelement ein Trägerband zu verwenden. Dabei kann die optische Faser auf dem Trägerband befestigt oder in dem Trägerband angeordnet sein.

Wird der bandförmig ausgebildete Temperatursensor um das Objekt beispielsweise wendelförmig herumgewickelt, so läßt sich die Überlänge der optischen Faser gegenüber dem zu überwachenden Objekt weiter vergrößern.

Aus dem gleichen Grund ist es ebenfalls von Vorteil, wenn die optische Faser mäanderförmig oder schleifenförmig verläuft.

Für eine sichere Anordnung der optischen Faser sowie eine einfache Herstellung und Montage eines bandförmigen Temperatursensors ist es vorteilhaft, wenn das Trägerelement durch zwei übereinander liegende Folien gebildet ist.

Um einen guten Wärmeübergang zwischen dem Objekt und der optischen Faser des Temperatursensors sicherzustellen, ist es vorteilhaft, wenn das Trägerband eine gute Wärmeleitfähigkeit aufweist. Aus dem gleichen Grund ist es ebenfalls von Vorteil, wenn das Trägerband an seiner dem Objekt zugewandten Außenseite mit einer Metallschicht versehen ist.

Für eine einfache Herstellung des Temperatursensors ist es von Vorteil, wenn die optische Faser auf eine mit einem Klebemittel versehene Seite einer ersten Folie gelegt und eine zweite Folie auf die mit dem Klebemittel und der optischen Faser versehene Seite der ersten Folie aufgebracht wird.

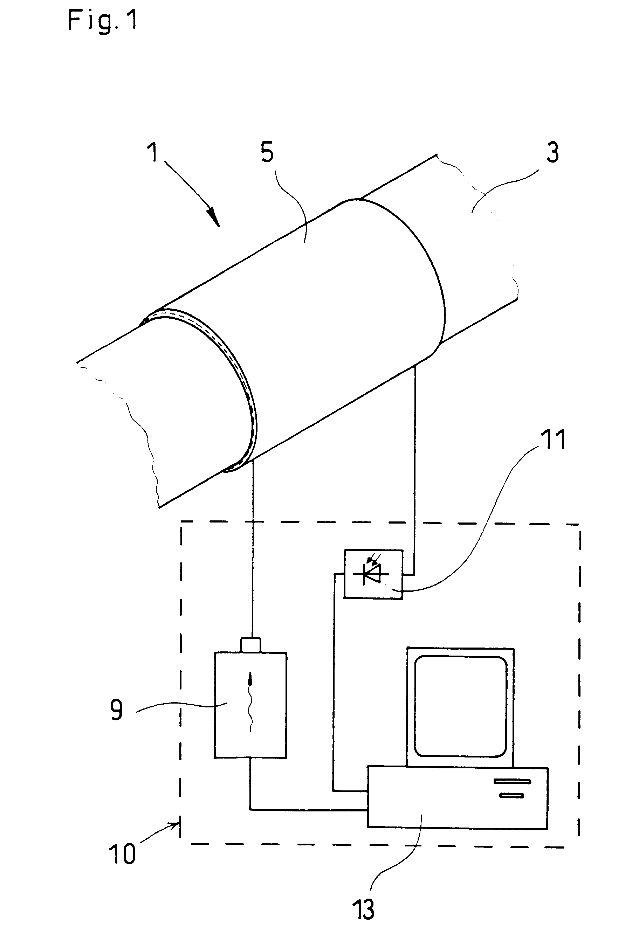

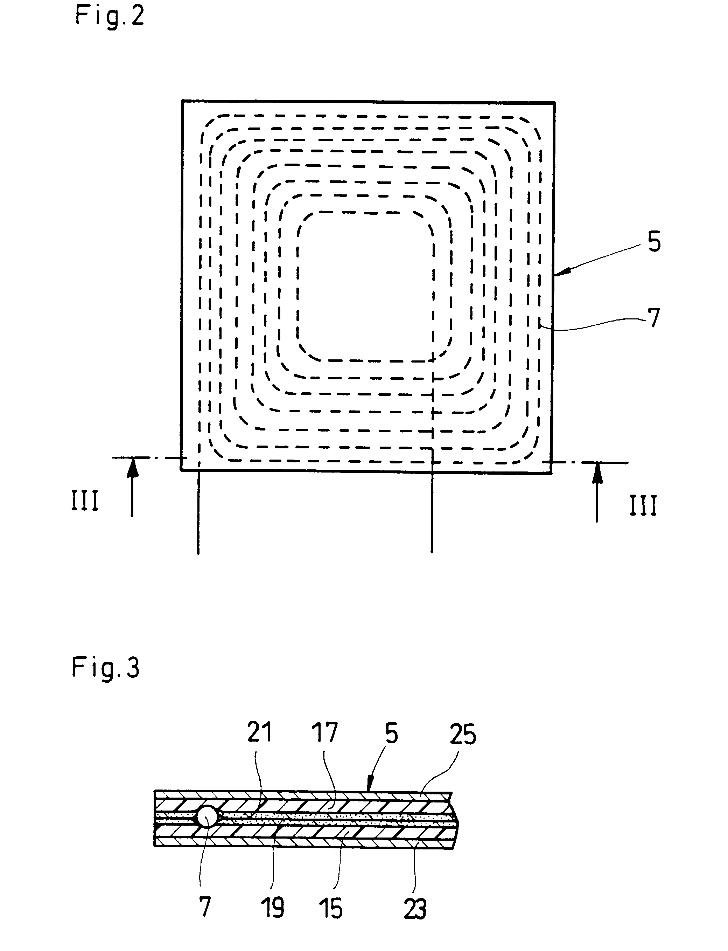

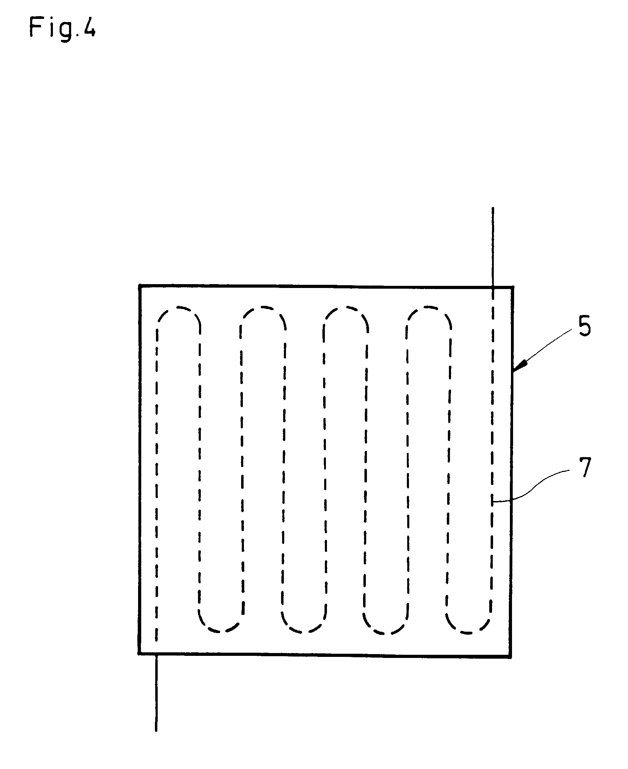

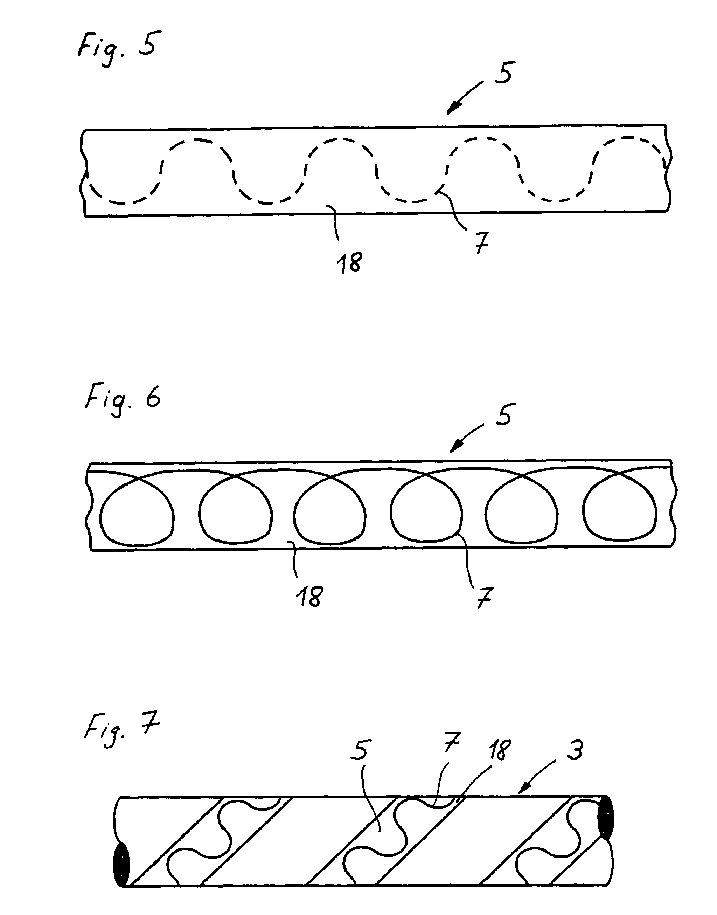

Ausführungsbeispiele der Erfindung sind in der Zeichnung vereinfacht dargestellt und in der nachfolgenden Beschreibung näher erläutert. Es zeigen Figur 1 eine Vorrichtung zur Ermittlung der Temperatur eines Objekts mit einem eine optische Faser aufweisenden Temperatursensor, Figur 2 ein erstes Ausführungsbeispiel eines erfindungsgemäßen Temperatursensors in einer Draufsicht, Figur 3 einen teilweise und stark vergrößert dargestellten Schnitt entlang der Linie III-III in Figur 2, Figur 4 ein zweites Ausführungsbeispiel eines erfindungsgemäßen Temperatursensors in einer Draufsicht, Figur 5 ein drittes Ausführungsbeispiel eines erfindungsgemäßen Temperatursensors in einer Draufsicht, Figur 6 ein viertes Ausführungsbeispiel eines erfindungsgemäßen Temperatursensors in einer Draufsicht sowie Figur 7 einen um ein zu überwachendes Objekt wendelförmig herumgewickelten bandförmigen Temperatursensor.

Die in der Figur 1 beispielhaft dargestellte Vorrichtung 1 zur Ermittlung der Temperatur eines Objekts 3, z. B. einer Mittelspannungs- oder Hochspannungsgarnitur, weist einen Temperatursensor 5 auf, der um den Umfang des Objekts 3 herumgelegt ist. Der Temperatursensor 5 hat eine optische Faser aus Glas, die im wesentlichen luftdicht zwischen zwei Folien des Temperatursensors 5 eingebettet ist und die zur Temperaturmessung verwendet wird.

Zur Überwachung der an der Oberfläche des Objekts 3 herrschenden Temperatur wird bei diesem Ausführungsbeispiel mit Hilfe eines Lasers 9 eines Temperaturmeßsystems 10 ein Eingangssignal an einem Ende in die optische Faser des Temperatursensors 5 gegeben. An ihrem anderen Ende steht die optische Faser des Temperatursensors 5 mit einem als Signalempfänger verwendeten Lichtsensor 11 des Temperaturmeßsystems 10 in Verbindung, der beispielsweise durch eine Fotodiode gebildet ist. Das optische Signal wird in ein entsprechendes elektrisches Signal umgewandelt. Dieses elektrische Signal wird an eine Auswerteeinheit 13 des Temperaturmeßsystems 10 weitergeleitet.

Bei der Temperaturmessung mittels optischer Fasern nutzt man die Eigenschaft von Glas, auf Temperatureinwirkung zu reagieren. Bei einer Temperaturänderung des Objekts 3 kommt es zu einer Änderung der physikalischen Eigenschaften der in dem Temperatursensor 5 verlaufenden Glasfaser und dadurch zu einer Änderung der optischen Übertragungseigenschaften der optischen Faser. Diese Änderung der optischen Eigenschaften wird durch die Auswerteeinheit 13 erfaßt und die Temperaturänderung bzw. die aktuelle Temperatur an der Oberfläche des Objekts 3 ermittelt. Selbstverständlich eignet sich der Temperatursensor 5 auch für andere Verfahren zur faseroptischen Temperaturmessung, die die physikalischen Effekte der Reaktion von Glas auf Temperatureinwirkung nutzen.

Die Figur 2 zeigt in einer Draufsicht ein erstes Ausführungsbeispiel eines erfindungsgemäßen Temperatursensors 5 mit einer gestrichelt dargestellten, z. B. spiralförmig verlaufenden optischen Faser 7. Der Aufbau des Temperatursensors 5 wird in der Figur 3 deutlich, die einen stark vergrößert dargestellten Schnitt entlang der Linie III-III in Figur 2 zeigt. Die optische Faser 7 ist annähernd luftdicht zwischen zwei aus einem Kunststoff bestehenden Folien 15 und 17 eingebettet. Die Folien 15 und 17 sind z. B. beide an ihrer der jeweils anderen Folie zugewandten Seite mit einer selbstklebenden Klebeschicht aus einem geeigneten Klebemittel 19 bzw. 21 versehen. An ihren der jeweils anderen Folie abgewandten Außenseiten weisen die beiden Folien 15 und 17 jeweils eine Metallschicht 23 bzw. 25 auf. Es ist aber ebenfalls möglich, daß nur auf einer Außenseite des Temperatursensors 5 eine Metallschicht vorgesehen ist, mit der der Temperatursensor 5 dann zum Zwecke eines möglichst guten Wärmeübergangs zwischen Objekt 3 und optischer Faser 7 an die Oberfläche des Objekts gelegt wird. Auf die hier beschriebene Weise lassen sich z. B. zwanzig Meter einer spiralförmig verlaufenden optischen Faser 7 in einem eine Kantenlänge von 100 mm aufweisenden quadratischen Temperatursensor 5 unterbringen.

Zur Herstellung eines solchen Temperatursensors 5 wird zunächst eine optische Faser 7 spiralförmig auf eine mit einem Klebemittel 19 versehene Seite einer ersten Folie 15 gelegt. Dann wird eine zweite Folie 17, die wie in der Figur 3 dargestellt beispielsweise ebenfalls an ihrer der anderen Folie 15 zugewandten Seite eine Schicht eines Klebemittels 21 aufweist, auf die mit dem Klebemittel 19 und der optischen Faser 7 versehene Seite der ersten Folie 15 aufgebracht und so an diese angedrückt, daß keine Luftblasen zwischen den beiden Folien 15 und 17 gebildet werden und die optische Faser 7 zumindest annähernd luftdicht zwischen den beiden Folien 15 und 17 eingebettet ist. Durch das Klebemittel 19 der ersten Folie 15 wird die z. B. spiralförmig aufgebrachte optische Faser 7 auf einfache und zuverlässige Weise in ihrer Lage auf der ersten Folie 15 fixiert, so daß eine einfache und kostengünstige Herstellung des Temperatursensors 5 ermöglicht wird.

In der Figur 4 ist ein zweites Ausführungsbeispiel eines erfindungsgemäßen Temperatursensors 5 in einer Draufsicht dargestellt. Dieses zweite Ausführungsbeispiel unterscheidet sich von dem in den Figuren 2 und 3 dargestellten ersten Ausführungsbeispiel im wesentlichen lediglich dadurch, daß die in der Figur 4 gestrichelt dargestellte, zur Temperaturmessung dienende optische Faser 7 mäanderförmig - also etwa wellenförmig - verlaufend zwischen den beiden Folien des Temperatursensors 5 angeordnet ist. Ansonsten entspricht das zweite Ausführungsbeispiel des Temperatursensors 5 weitgehend dem ersten Ausführungsbeispiel. In jedem Fall ist der minimal zulässige Biegeradius der optischen Faser 7 zu beachten.

Der in der Figur 5 beispielhaft dargestellte langgestreckte Temperatursensor 5 weist ein als Trägerelement dienendes Trägerband 18 auf, in dem eine gestrichelt dargestellte optische Faser 7 z. B. mäanderförmig, also wellenförmig angeordnet ist. Das Trägerband 18 dieses dritten Ausführungsbeispiels ist ähnlich wie bei den in den Figuren 2 bis 4 dargestellten Ausführungsbeispielen durch zwei bandförmige, übereinander liegende und miteinander verklebte oder verschweißte Folien gebildet.

Ein langgestreckter Temperatursensor 5 gemäß eines vierten Ausführungsbeispiels, bei dem eine schleifenförmig verlaufende optische Faser 7 auf einem Trägerband 18 z. B. durch Verklebung befestigt ist, ist in der Figur 6 dargestellt. Dabei ist es möglich, daß die Schleifen der optischen Faser 7 teilweise übereinander liegen und sich überlappen, so daß bei vorgegebenen Abmessungen des Trägerbandes 18 eine größere Länge der optischen Faser 7 auf dem Trägerband 18 untergebracht werden kann.

Die Figur 7 zeigt einen langgestreckten, bandförmigen Temperatursensor 5 mit einer auf ein Trägerband 18 mäanderförmig aufgebrachten optischen Faser 7, der um ein zu überwachendes langgestrecktes Objekt 3, z. B. ein Mittelspannungs- oder Hochspannungskabel, wendelförmig herumgewickelt ist. Durch das Herumwickeln wird der Temperatursensor 5 zum einen an dem Objekt 3 gehalten; zum anderen wird die Überlänge der zur Temperaturmessung dienenden optischen Faser 7 des Temperatursensors 5 in Relation zu der überwachten Länge des Objekts 3 weiter vergrößert. Ein mäanderförmiger oder auch schleifenförmiger Verlauf der optischen Faser 7 des Temperatursensors 5 hat zudem den Vorteil einer erhöhten Wechselbiegefestigkeit gegenüber einer in langem Schlag um das zu überwachende Objekt herumgelegten optischen Faser.

Ein bandförmiger Temperatursensor 5 läßt sich aber nicht nur zur Temperaturüberwachung von Mittelspannungs- oder Hochspannungskabeln, sondern auch für Hochfrequenzkabel, trommelbare Leitungen und die verschiedensten Rohrleitungen verwenden. Wird der Temperatursensor 5 im Kabelaufbau angeordnet, so ist das Material des Trägerbandes 18 entsprechend zu wählen, beispielsweise elektrisch leitfähig, quellend, diffusionsdicht oder polstemd. Im übrigen ist stets darauf zu achten, daß ein guter Wärmeübergang von dem zu überwachenden Objekt 3 auf die zur Temperaturüberwachung dienende optische Faser 7 möglich ist. Zu diesem Zweck wird ein eine gute Wärmeleitfähigkeit aufweisendes und/oder an seiner dem Objekt 3 zugewandten Außenseite mit einer Metallschicht versehenes Trägerband gewählt.

Es ist ebenfalls möglich, in einem Temperatursensor 5 nicht nur eine, sondern mehrere zur Temperaturüberwachung dienende optische Fasern 7 anzuordnen oder zur Temperaturüberwachung eines Objekts 3 mehrere, im allgemeinen mit Abstand zueinander angeordnete Temperatursensoren 5 zu verwenden.

## Patentansprüche

1. Vorrichtung zur Ermittlung der Temperatur eines Objekts (3) mit einem zumindest eine optische Faser (7) aufweisenden Temperatursensor (5) und einem Temperaturmeßsystem (10), **dadurch gekennzeichnet**, daß die optische Faser (7) des Temperatursensors (5) durch ein Trägerelement (15, 17, 18) gehalten ist.

2. Vorrichtung nach Anspruch 1, **dadurch gekennzeichnet,** daß das Trägerelement durch zwei Folien (15, 17) gebildet ist, zwischen denen die optische Faser (7) angeordnet ist.

3. Vorrichtung nach Anspruch 2, **dadurch gekennzeichnet,** daß die optische Faser (7) spiralförmig zwischen den beiden Folien (15, 17) angeordnet ist.

4. Vorrichtung nach Anspruch 2, **dadurch gekennzeichnet,** daß die optische Faser (7) mäanderförmig zwischen den beiden Folien (15, 17) angeordnet ist.

5. Vorrichtung nach Anspruch 2, **dadurch gekennzeichnet,** daß die optische Faser (7) schleifenförmig zwischen den beiden Folien (15, 17) angeordnet ist.

6. Vorrichtung nach einem der Ansprüche 2 bis 5, **dadurch gekennzeichnet,** daß die optische Faser (7) zumindest annähernd luftdicht zwischen den beiden Folien (15, 17) eingebettet ist.

7. Vorrichtung nach einem der Ansprüche 2 bis 6, **dadurch gekennzeichnet,** daß zumindest eine der Folien (15, 17) an ihrer der anderen Folie (17, 15) zugewandten Seite mit einem Klebemittel (19, 21) versehen ist.

8. Vorrichtung nach einem der Ansprüche 2 bis 7, **dadurch gekennzeichnet,** daß zumindest eine der Folien (15, 17) an ihrer der anderen Folie (17, 15) zugewandten Seite selbstklebend ist.

9. Vorrichtung nach einem der Ansprüche 2 bis 8, **dadurch gekennzeichnet,** daß die beiden Folien (15, 17) aus einem Kunststoff ausgebildet sind.

10. Vorrichtung nach einem der Ansprüche 2 bis 9, **dadurch gekennzeichnet,** daß zumindest eine der Folien (15, 17) eine gute Wärmeleitfähigkeit aufweist.

11. Vorrichtung nach einem der Ansprüche 2 bis 10, **dadurch gekennzeichnet,** daß zumindest eine der Folien (15, 17) an ihrer der anderen Folie (17, 15) abgewandten Außenseite mit einer Metallschicht (23, 25) versehen ist.

12. Vorrichtung nach einem der Ansprüche 2 bis 11, **dadurch gekennzeichnet,** daß die beiden Folien (15, 17) bandförmig ausgebildet sind.

13. Vorrichtung nach Anspruch 1, **dadurch gekennzeichnet,** daß das Trägerelement durch ein Trägerband (18) gebildet ist.

14. Vorrichtung nach Anspruch 13, **dadurch gekennzeichnet,** daß die optische Faser (7) auf dem Trägerband (18) befestigt ist.

15. Vorrichtung nach Anspruch 13, **dadurch gekennzeichnet,** daß die optische Faser (7) in dem Trägerband (18) angeordnet ist.

16. Vorrichtung nach Anspruch 15, **dadurch gekennzeichnet**, daß das Trägerband (18) durch zwei übereinander liegende Folien gebildet ist.

17. Vorrichtung nach einem der Ansprüche 13 bis 16, **dadurch gekennzeichnet,** daß die optische Faser (7) mäanderförmig verläuft.

18. Vorrichtung nach einem der Ansprüche 13 bis 16, **dadurch gekennzeichnet,** daß die optische Faser (7) schleifenförmig verläuft.

19. Vorrichtung nach einem der Ansprüche 13 bis 18, **dadurch gekennzeichnet**, daß das Trägerband (18) eine gute Wärmeleitfähigkeit aufweist.

20. Vorrichtung nach einem der Ansprüche 13 bis 19, **dadurch gekennzeichnet,** daß das Trägerband (18) an seiner dem Objekt (3) zugewandten Außenseite mit einer Metallschicht versehen ist.

21. Vorrichtung nach einem der Ansprüche 1 bis 20, **dadurch gekennzeichnet,** daß der Temperatursensor (5) um das Objekt (3) herumgelegt ist.

22. Vorrichtung nach einem der Ansprüche 13 bis 20, **dadurch gekennzeichnet,** daß der Temperatursensor (5) um das Objekt (3) herumgewickelt ist.

23. Verfahren zur Herstellung einer einen Temperatursensor (5) mit zumindest einer optischen Faser (7) und ein Temperaturmeßsystem (10) aufweisenden Vorrichtung (1) zur Ermittlung der Temperatur eines Objekts (3), bei dem der Temperatursensor (5) an das Objekt (3) gelegt und mit dem Temperaturmeßsystem (10) verbunden wird, **dadurch gekennzeichnet**, daß zur Herstellung des Temperatursensors (5) die optische Faser (7) auf eine mit einem Klebemittel (19) versehene Seite einer ersten Folie (15) gelegt und eine zweite Folie (17) auf die mit dem Klebemittel (19) und der optischen Faser (7) versehene Seite der ersten Folie (15) aufgebracht wird.

24. Verfahren nach Anspruch 23, **dadurch gekennzeichnet,** daß die optische Faser (7) spiralförmig auf die mit dem Klebemittel (19) versehene Seite der ersten Folie (15) gelegt wird.

25. Verfahren nach Anspruch 23, **dadurch gekennzeichnet,** daß die optische Faser (7) mäanderförmig auf die mit dem Klebemittel (19) versehene Seite der ersten Folie (15) gelegt.

26. Verfahren nach Anspruch 23, **dadurch gekennzeichnet,** daß die optische Faser (7) schleifenförmig auf die mit dem Klebemittel (19) versehene Seite der ersten Folie (15) gelegt wird.

27. Verfahren nach einem der Ansprüche 23 bis 26, **dadurch gekennzeichnet,** daß die zweite Folie (17) zumindest annähernd luftdicht auf die mit Klebemittel (19) und optischer Faser (7) versehene Seite der ersten Folie (15) aufgebracht wird.
